# EUROPEAN PATENT SPECIFICATION

(11) **EP 2 694 748 B1**
(45) Date of publication and mention of the grant of the patent: **15.02.2017**
(21) Application number: 12712387.5
(22) Date of filing: 21.03.2012
(51) Int. Cl.: E04B 1/32, E04H 15/20

(54) **METHOD OF PRODUCING A BOWL-SHAPED STRUCTURE, A STRUCTURAL ELEMENT AND A STRUCTURE**
VERFAHREN ZUR HERSTELLUNG EINER SCHALENFÖRMIGEN STRUKTUR, STRUKTURELEMENT UND STRUKTUR
PROCÉDÉ DE FABRICATION D'UNE STRUCTURE EN FORME DE BOL, ÉLÉMENT STRUCTURAL ET STRUCTURE

(30) Priority: 05.04.2011 NL 2006545
(43) Date of publication of application: 12.02.2014
(73) Proprietor: Daedalissimo N.V., 5611 NW Eindhoven (NL)
(72) Inventor: RUTTEN, Constantijn, Martha, Jozef, NL-6026 XD Maarheeze (NL)
(74) Representative: Nederlandsch Octrooibureau
(86) International application number: PCT/NL2012/050175
(87) International publication number: WO 2012/138215

(56) References cited:
- WO-A1-00/58575
- WO-A1-2006/053363
- WO-A2-2009/073448
- DE-A1- 2 324 214
- US-A- 3 508 270
- US-A- 5 201 345
- US-B1- 7 380 802

## Description

The invention relates to a method of producing a bowl-shaped structure, such as a dome or a tunnel, and a torus-shaped structural element for use in said method and a structure which is produced by means of the method using the abovementioned structural elements.

American patent publication US 4,583,330 describes a modular dome structure which is composed of inflatable elements. These inflatable elements comprise Y-shaped tensioning elements with legs which make angles of 120°, 120° and 108° with respect to one another and length elements having a uniform length. By interconnecting the Y-shaped tensioning elements by means of the length elements, an inflatable modular dome structure is created which may have a pentagonal or hexagonal cell structure as its highest surface.

The dome structure is erected by filling the elements which form the pentagonal or hexagonal cell structures, for example with a gas. The inflatable elements can be made more resistant to the loads and stresses exerted thereon in a number of ways. A first possibility is to reinforce the elements after they have been filled by using a hardening process, such as vulcanization. Another possibility is to fill the elements with an air-containing lightweight material which provides strength once it has hardened after filling. A further possibility which could possibly be combined with the first and/or second possibility is the application of a protective layer on the outer side of the elements.

A drawback of the above-described modular inflatable dome structures is the fact that a relatively large number of elements have to be assembled in order to construct them. Furthermore, a lot of attention has to be paid to whether a pentagonal or a hexagonal cell structure has to be produced, as this has consequences for the direction of the legs of the Y-shaped tensioning elements. As a result thereof, the construction of such a dome structure is fairly labour-intensive and consequently rather costly. Furthermore, after the dome structure has been erected, the strength of at least the cell structures which are situated at special locations has to be improved, for example depending on the design of the dome structure, at certain corners. This additional operation increases the costs of such a structure. If the strengthening of the cell structures is achieved by means of vulcanization, this may involve a risk with regard to fire safety, as sulphur-containing gas is used in the process.

WO 2006/053363 A1 relates to a cellular inflatable building element for the purpose of a simple production and being universally used for objects that are formed from a number of building elements. The cellular inflatable building element is characterized by the combination of the following features: it has straight-lined lateral delimitations located in a plane; all lateral delimitations are of the same length; the building element has a cavity; this cavity is delimited by a deformable thin-walled membrane; this membrane, which is provided with a valve, is the outer delimitation of the building element; at least one deformable, thin-walled intermediate membrane extending over approximately the height of the building element is provided inside the cavity; this intermediate membrane extends approximately perpendicular to the plane and connects the membranes of the building element, which extend, in essence, in the direction of the plane and which are located on both sides of the cavity, whereby; connecting means, which extend approximately over the length of the lateral delimitations, are provided on the lateral delimitations for establishing a connection to an adjacent building element.

It is an object of the present invention to provide a method of producing a bowl-shaped structure, such as a dome or a tunnel, which overcomes the abovementioned drawbacks or at least reduces them. It is also an object of the present invention to provide a structural element for use in the abovementioned method. It is a further object of the present invention to provide a structure which is produced by means of the abovementioned method using the abovementioned structural elements.

At least one of these objects is achieved by a method of producing a bowl-shaped structure, comprising:
- providing a plurality of torus-shaped structural elements which can be filled with a filling medium and each of which extends around a torus axis and each of which comprises a torus face which is directed transversely to said torus axis,
- placing the structural elements against one another in such a manner that the respective torus faces of adjacent structural elements are substantially in line with each other or are at a slight angle to one another,
- connecting the structural elements which have been placed against one another,
- filling the structural elements with a filling medium in order to form a bowl-shaped structure, for example a dome or tunnel.

By using this method, it is possible to construct a bowl-shaped structure with significantly fewer fillable structural elements than according to the above-described prior art. The construction of the bowl-shaped structure which the method according to the invention provides is very simple, since only interconnected torus-shaped structural elements are used. The bowl-shaped structure can be erected in a simple manner by filling structural elements which have been placed against one another by means of their torus faces and which have been interconnected in such a manner that the respective torus faces of adjacent structural elements are substantially in line with one another or are at a slight angle with respect to one another. As a result thereof, it is possible to produce a bowl-shaped structure, for example a marque, shed or multi-purpose hall in a less labour-intensive way than is the case with the known modular dome structure from the above-described prior art. As a result thereof, the costs of the bowl-shaped structure according to the present invention can be lower.

A further method according to the present invention comprises filling the structural elements with a gas which is at a positive pressure relative to atmospheric pressure. As a result thereof, it is possible to provide torus-shaped elements which are relatively lightweight and have sufficient stiffness and strength to be able to absorb the forces acting thereon so that the stability of the structure might not be at risk.

A further method according to the present invention comprises filling the structural elements with a hardenable filling medium. As a result thereof, structural elements can be provided which are suitable for use in a section of the structure which ensures stable positioning on a surface. Examples of hardenable filling media which could be used for this purpose are concrete or cement. It is also conceivable for the filling medium to be partly hardenable after it has been introduced into the torus-shaped structural element.

A further method according to the present invention comprises filling the structural elements with a liquid. It is possible to use a liquid such as water as filling medium in structural elements which are used to provide stable positioning on the surface. It is also possible to fill the structural elements in such a manner that the filling medium is present in the structural element in both liquid and gaseous phase. It is also possible for different filling media to be present in the structural element in different phases, that is to say that the one filling medium is present, for example, in the liquid phase and the other filling medium is present in the gaseous phase or that the one filling medium is present in the solid phase and the other filling medium is present in the liquid phase or that the one filling medium is present in the solid phase and the other filling medium is present in the gaseous phase.

A further method according to the present invention comprises providing torus-shaped structural elements with an outer diameter which is larger by at least a factor 1.1 than an inner diameter thereof. Filled torus-shaped structural elements with such a ratio between the outer and inner diameter are sufficiently strong and stiff to absorb the forces acting thereon in such a manner that they have a high load-bearing capacity.

A further method according to the present disclosure comprises providing torus-shaped structural elements which comprise an axial opening which is kept completely clear.

A further method according to the present disclosure comprises placing the torus faces of adjacent structural elements at an angle of at most 30°, preferably at most 15° and more preferably at most 1°. As a result thereof, it is possible to produce bowl-shaped structures of different sizes and shapes.

A further method according to the present invention comprises, viewed at least in a cross section of the structure, placing torus faces of all structural elements which are in said cross section in such a manner that the structure, at least in said cross section, comprises a monotonously curved section and preferably is completely monotonously curved.

A further method according to the present invention comprises:
- producing a first set of structural elements which are attached to one another and together form a first series,
- filling the structural elements of this first series in such a way that a structural section is obtained,
- after filling said structural elements, attaching further structural elements thereto which are situated outside the filled series,
- filling the remaining structural elements.

By in each case constantly filling a subsequent series of structural elements, for example, with a gas which is at positive pressure relative to the atmospheric pressure, it is possible to move the structure further upwards in its entirety. This makes it possible to erect structures without having to use a large amount of manpower and/or large equipment, such as cranes. As a result thereof, the costs of erecting bowl-shaped structures according to the invention are lower than for known structures according to the prior art.

A further method according to the present invention comprises attaching the first series of torus-shaped structural elements to the further structural elements in such a manner that they are arranged in one and only one layer.

A further method according to the present invention comprises:
- attaching structural elements to one another by means of coupling elements which engage with in each case two adjacent structural elements on either side of the respective torus faces thereof,
- filling the structural elements with a filling medium,
- applying a tensile stress on the coupling elements and tensioning elements by filling the structural elements.

Rigid or flexible cables or belts and/or ropes and/or chains and/or combinations of the abovementioned coupling elements can be used as coupling elements.

According to a further aspect of the present invention, a structural element is provided for use in the method according to the invention, comprising the features of claim 8, such as a flexible torus-shaped shell which contains an internal chamber, a sealable inlet to the chamber to fill the chamber with a filling medium, and tensioning elements on an outer side of the shell for coupling elements to engage on. By providing a fillable flexible torus-shaped shell, the weight of the structural element can be kept relatively low, at least in a state in which it is not yet filled, compared to traditional structural elements. A relatively light weight of the individual structural elements may contribute to relatively low transportation costs for the structural elements. A further advantage of a flexible shell is that it can be stored in a compact manner when it is empty. As a result thereof, such a structural element occupies a smaller volume than a traditional structural element, which may provide a logistical advantage and result in a further cost reduction. The internal chamber of the torus-shaped shell will preferably be a single torus-shaped chamber. However, it will be clear to those skilled in the art that other configurations of the internal chamber are conceivable, for example chambers which comprise several, optionally interconnected, compartments. The sealable inlet to the internal chamber may be configured as an inlet with a valve function. It will be clear to those skilled in the art how the valve function has to be implemented, depending on the kind of filling medium used. The tensioning elements on which the coupling elements connecting two adjacent structural elements can engage are provided on the outer side of the torus-shaped shell. Preferably, the tensioning elements are arranged on either side of the torus face and are in this case directed in a radial direction relative to the torus axis. After the internal chamber of the torus-shaped shell has been filled, the coupling elements and the tensioning elements are under tensile stress. As a result thereof, the connection between the structured elements which are attached to each other is so strong that the structure maintains its stability, despite the forces acting on the structure and the load to which it is subjected.

In an embodiment of the structural element according to the present disclosure, the torus-shaped shell has an outer diameter which is larger than an inner diameter thereof by at least a factor 1.1. Such a diameter ratio results in torus-shaped shells which are sufficiently strong and stiff to absorb the forces acting thereon in such a manner that bowl-shaped structures which are stable and have a high load-bearing capacity can be produced using the structural elements according to the present invention.

In an embodiment of the structural element according to the present disclosure, the outer diameter is larger than the inner diameter by a factor of at most 6. At a larger diameter ratio of the torus-shaped shell, the axial opening becomes too small, as a result of which the tensioning elements become too narrow to be able to produce them. In addition, at a larger diameter ratio of the torus-shaped shell, the weight of the structural element is relatively large. This can make it more difficult to erect the structure, as a result of which more manpower would be required and could necessitate the use of large equipment, such as cranes. This would lead to an undesirable increase in the costs of erecting the bowl-shaped structure.

In an embodiment of the structural element according to the present invention, the shell comprises a substantially impermeable wall and a sleeve which is situated outside the substantially impermeable wall, which substantially impermeable wall is provided with an inlet to the internal chamber and which sleeve has fastening elements. The substantially impermeable wall of the shell serves to keep the filling medium confined in the internal chamber as long as is desirable to provide an operating state for the bowl-shaped structure. Via the inlet in the substantially impermeable wall, the internal chamber can be filled with a filling medium, as has already been described above. The sleeve which is situated outside the substantially impermeable wall serves to prevent the torus-shaped shell from failing, for example tearing as a result of stresses, such as membrane stresses, which act on it as a result of the filling medium which has been introduced in the internal chamber. It will be clear to someone skilled in the art that the sleeve can be implemented in different ways and using different materials. The sleeve also carries the fastening elements on which positioning elements engage which are used to keep the tensioning elements in such a position that adjacent structural elements can be connected to one another by fitting coupling elements.

In an embodiment of the structural element according to the present invention, the substantially impermeable wall has a first and a second side, wherein the first side is turned towards the internal chamber, wherein, while leaving the inlet to the internal chamber clear, the second side is covered with a first layer which comprises flexible material, wherein, while leaving the inlet to the internal chamber clear, the first layer is covered with a second layer comprising flexible material, wherein, while leaving the inlet to the internal chamber clear, tensioning elements are positioned on the second layer which are configured to connect elements to one another, wherein the sleeve is arranged between the first and the second layer, while leaving the inlet to the internal chamber clear, wherein the sleeve comprises flexible material and is configured to absorb substantially membrane stresses in such a way that the shell is substantially dimensionally stable while the filling medium is situated inside the latter at a positive pressure relative to atmospheric pressure.

Due to local variations in the properties of, for example, the substantially impermeable wall, in particular around the inlet to the internal chamber which is formed therein, it is possible that the torus shape of the shell is not maintained well during production. The first layer which covers the second side of the substantially impermeable wall is arranged in such a manner that, inter alia, during production of the structural element, the torus shape thereof is maintained at least to a greater degree. In order to reinforce the torus-shaped shell in such a manner that it is suitable to be filled with a filling medium which is under positive pressure, a sleeve of flexible material is fitted around the first layer. By making the sleeve from a material which has a certain degree of flexibility, it is possible to fill the torus-shaped shell until a certain desired strength and stiffness of the structural element is achieved. By cooperating, the first layer and the sleeve can contribute to making the structural element suitable for storing a filling medium under positive pressure relative to the atmospheric pressure therein, while retaining the torus shape of the structural element as much as possible.

The second layer which is arranged around the sleeve has various functions. A first function is to offer protection against damage of the structural element resulting from physical contact with, for example, sharp objects. Furthermore, the second layer may be configured in such a manner that the effect of UV radiation on the composition and/or the appearance of the materials used in this layer and layers located underneath is as small as possible. A second function of the second layer is that tensioning elements can be positioned thereon on which the coupling elements engage which are used to connect adjacent structural elements to one another. It is also possible to attach cover elements to the tensioning elements which serve to make the bowl-shaped structure, for example, windproof and/or watertight. The cover elements may also be configured and fitted in such a manner to give the structure a specific functional and/or aesthetic appearance. A third function of the second layer is to give the structural element a specific appearance.

In an embodiment of the structural element according to the present invention, the fastening elements are in contact with the second layer and are arranged on either side of the torus face, wherein the tensioning elements are configured to connect structural elements to one another and the fastening elements are configured, on the one hand, to keep the tensioning elements in place and, on the other hand, to connect a cover element to the structural element. In a non-limiting example, two fastening elements are used on a first side of the torus face to keep a first part of a tensioning element in place. In this case, the two fastening elements and the tensioning element are connected to one another by means of a positioning element, for example a rope, in a configuration which comes close to a triangle of forces. As a result thereof, forces which are exerted on this configuration when the structural element is coupled to an adjacent structural element can be transmitted and/or distributed in such a way so as not to cause damage of the fastening elements and/or the elements, for example stitching thread, which connect the fastening elements and the sleeve.

In an embodiment of the structural element according to the present invention, a protection element is arranged on the outer side of the torus-shaped shell at the location of the outer diameter thereof, wherein the protection element extends in the peripheral direction of the shell. When the torus-shaped shell is filled with the filling medium, membrane stresses are greatest on the outer side of the shell at the location of the outer diameter. As a result thereof, the risk of damage to the torus-shaped shell at this location due to physical contact with external objects or ruptures, occurring in the material from which the torus-shaped shell is made, is greater than at other locations. By fitting the protection element, the membrane stresses can be absorbed more readily and the risk of the abovementioned damage can at least be reduced.

In an embodiment of the structural element according to the present disclosure, the protection element is a strip which is fitted between the first layer and the second layer.

In an embodiment of the structural element according to the present disclosure, the strip comprises textile and/or film. As a result thereof, it is possible to reduce the costs of the structural element due to a simpler production process.

In an embodiment of the structural element according to the present disclosure, the filling medium comprises a gas and/or a liquid and/or an at least partly hardenable substance. If the filling medium is a gas, it is possible to provide torus-shaped elements which are relatively lightweight and have sufficient stiffness and strength to be able to absorb the forces acting thereon in such a manner that the stability of the structure is not at risk. If the filling medium is a liquid, structural elements may be provided which are suitable for use in a section of the structure which has to ensure a stabile positioning on a surface. This also applies if the filling medium is an at least partly hardenable substance. Examples of suitable at least partly hardenable substances are concrete or cement. It is also possible to fill the structural elements in such a manner that the filling medium is present in the structural element in both the liquid and the gaseous phase. It is also possible for different filling media to be present in different phases in the structural element, that is to say that the one filling medium is present, for example, in the liquid phase and the other filling medium is present in the gaseous phase or that the one filling medium is present in the solid phase and the other filling medium is present in the liquid phase or that the one filling medium is present in the solid phase and the other filling medium is present in the gaseous phase.

In an embodiment of the structural element according to the present disclosure, the positive pressure in the torus-shaped shell in the filled state is in a range from approximately 1 to 100 bar, preferably in a range from approximately 1-15 bar. The positive pressure is the pressure relative to the atmospheric pressure outside the structural element. Due to the possibility of filling the structural elements according to the present invention to a pressure which is inside the above ranges, the structural elements have sufficient stiffness and strength to construct a bowl-shaped structure. In the case of known low-pressure inflatable bowl-shaped structures, it is necessary to continuously connect the inflatable elements to a filling device, for example a compressor. This is not necessary in the case of the structural elements according to the invention and contributes to a further cost reduction of bowl-shaped structures which are constructed using structural elements according to the invention.

In an embodiment of the structural element according to the present disclosure, the wall of the torus-shaped shell comprises a substantially impermeable polymer. As a result thereof, it is possible to provide a structural element which only has to be replenished after some time, for example after a few months, in order to keep the positive pressure of the filling medium relative to the atmospheric pressure at a desired level. Examples of suitable polymers for this purpose are various types of natural and/or synthetic rubbers and/or polyvinylchloride (PVC), polyethene, polyurethane, polypropene, polyamide, polyester, ethylene tetrafluoroethylene copolymer (ETFE) and coated fabrics comprising, for example, polyester or polyamide.

In an embodiment of the structural element according to the present disclosure, depending on the desired performance of the structural element, the first and the second layer comprise a textile and/or film. The term textile is intended to mean materials which are woven or comprise fibres. In this context, consideration may for example be given to mineral wool which forms part of the ceramic materials or to fabrics which comprise metal fibres. Depending on the application, polyester, polyamide, aramide, polyethene, polyurethane, polyvinylchloride and/or polypropene fabrics are suitable types of textile for use in the first and second layer of the structural element according to the present invention. The term film is intended to mean materials which are available in the form of homogeneous flexible sheet material. Consideration may for example be given to pvc film. Suitable types of film furthermore include for example polyethene, polyurethane, polypropene, polyamide, polyester, ETFE and polytetrafluoroethylene (PTFE).

In an embodiment of the structural element according to the present disclosure, the polymer and/or the textile and/or the film is at least flame-retardant. For safety reasons, the structural element has to comprise materials which are at least flame-retardant. Depending on the specific application of the bowl-shaped structure, materials may have to be used which guarantee a higher degree of fire resistance. Possible examples are materials which are flame-extinguishing and/or flame-retardant. Flame-retardant and/or flame-extinguishing properties may be imparted on the polymer and/or textile and/or film used by suitable treatment thereof for this purpose, for example by coating and/or impregnating them with flame-retardant and/or flame-extinguishing materials. Examples of suitable fire-resistant types of textile are fabrics which comprise aramide fibres, glass fibres, carbon fibres and/or ceramic fibres.

According to a further aspect of the present invention, as defined by claim 13, a structure is provided which is made by means of the method and using structural elements according to the invention, wherein the parts, which are turned towards each other, of the torus-shaped shells of in each case two adjacent structural elements bear against each other and the coupling elements and tensioning elements situated on either side of the respective torus faces of said structural elements are under tensile prestress. The coupling elements under tensile prestress push adjacent structural elements firmly against each other in such a manner that a bowl-shaped structure can be produced which is strong and highly resistant to load.

In an embodiment of the structure according to the present disclosure, the torus faces of adjacent structural elements are directed at a slight angle relative to each other, such as an angle of at most 30°, preferably of at most 15°, more preferably of at most 1°. Due to the relatively slight angle between the torus faces of adjacent structural elements, it is possible to achieve a good load-bearing capacity of the structure. As a result thereof, it is possible to produce bowl-shaped structures which can span across a large area while having a high load-bearing capacity.

In an embodiment of the structure according to the present invention, the angle between the torus faces of adjacent structural elements is adjustable by suitable choice of the length of the coupling elements. The coupling elements which connect two adjacent structural elements are situated on either side of the respective torus face of said structural elements. Due to a difference in the length of the coupling elements, the angle between the adjacent torus faces is adjustable. In this way, any desired angle can be achieved by determining the required lengths of the respective coupling elements. This determination preferably takes place by means of a calculation using an accurate computer model of the bowl-shaped structure to be produced.

In an embodiment of the structure according to the present invention, the angle between the torus faces of adjacent structural elements is adjustable by suitable choice of the length of the tensioning elements. As a result thereof, it is possible to adjust the angle between the torus faces of the adjacent structural elements by using coupling elements of equal length. This is advantageous when constructing a bowl-shaped structure as in that case the various coupling elements and the fitting thereof in a correct position do not have to be allowed for.

In an embodiment of the structure according to the present disclosure, the torus-shaped structural elements are arranged in one and only one layer. As a result thereof, it is possible to produce a bowl-shaped structure which is constructed as simply as possible without concessions having to be made with regard to the stability and load-bearing capacity of the structure.

In an embodiment of the structure according to the present invention, cover elements are connected to the structural elements and the cover elements are configured in such a manner that the structure is windproof and watertight. As a result thereof, it is possible to produce bowl-shaped structures which can, for example, be used as a marquee, multi-purpose hall, sports centre etc. If no cover elements are connected to the structure, it can be used, for example, as climbing object, work of art, etc.
Fig. 1 shows a perspective view of an embodiment of a bowl-shaped structure according to the present invention.
Fig. 1a shows a cross section of the bowl-shaped structure from Fig. 1 along line Ia-Ia.
Fig. 1b shows a detail of the cross section of the bowl-shaped structure in area Ib of Fig. 1a.
Fig. 1c shows a cross section of the bowl-shaped structure as in Fig. 1a. The difference with Fig. 1a is that the internal chambers of structural elements of a first series which are connected to the structural elements of a second series in abutting contact have a different cross section, at least in a radial direction relative to the torus axis.
Fig. 2 shows a perspective view of an embodiment of a structural element according to the present invention.
Fig. 3 shows a perspective view of an embodiment of a dome according to the present invention which is provided with cover elements.
Fig. 3a shows a perspective view of an embodiment of a cover element which can be attached to a structural element according to the present invention.
Fig. 3b shows a perspective view of an assembly of the cover element according to Fig. 3a and a structural element according to the present invention in a position of use.
Fig. 4 shows a perspective view of an embodiment of a tunnel according to the present invention.

The figures are not necessarily drawn to scale. Identical or similar parts in the various figures may have been denoted by the same reference numerals.

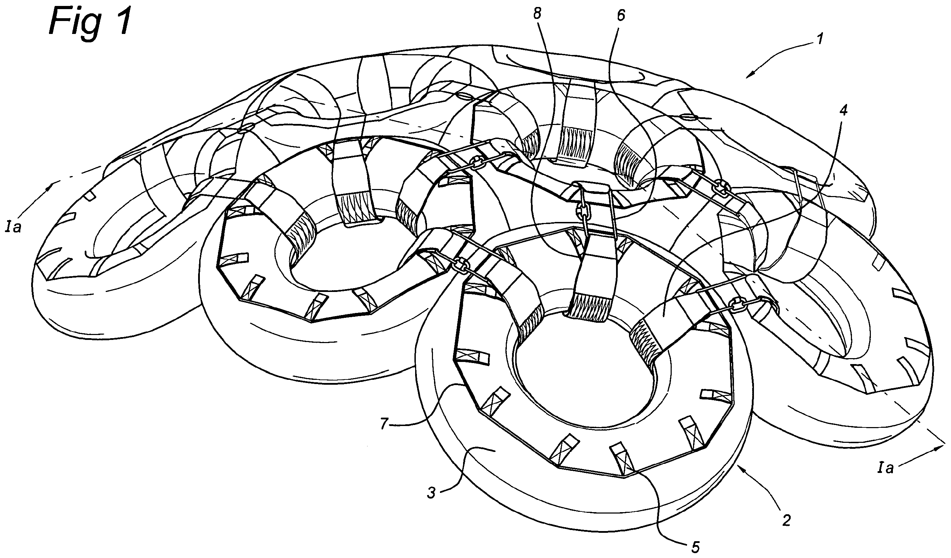

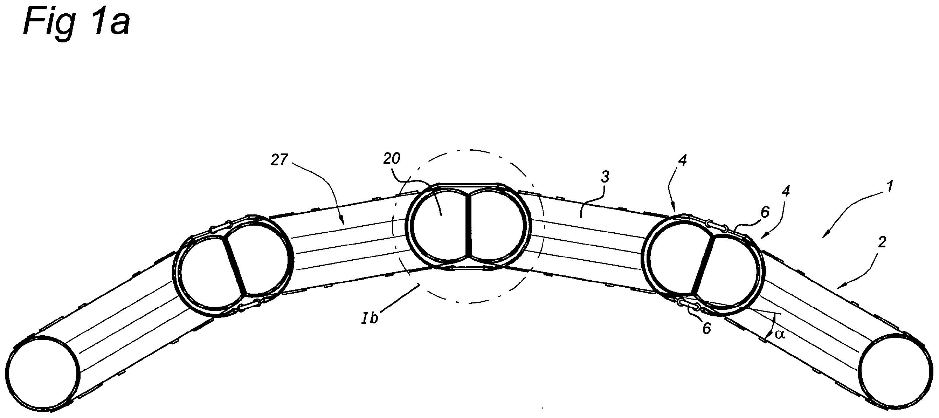

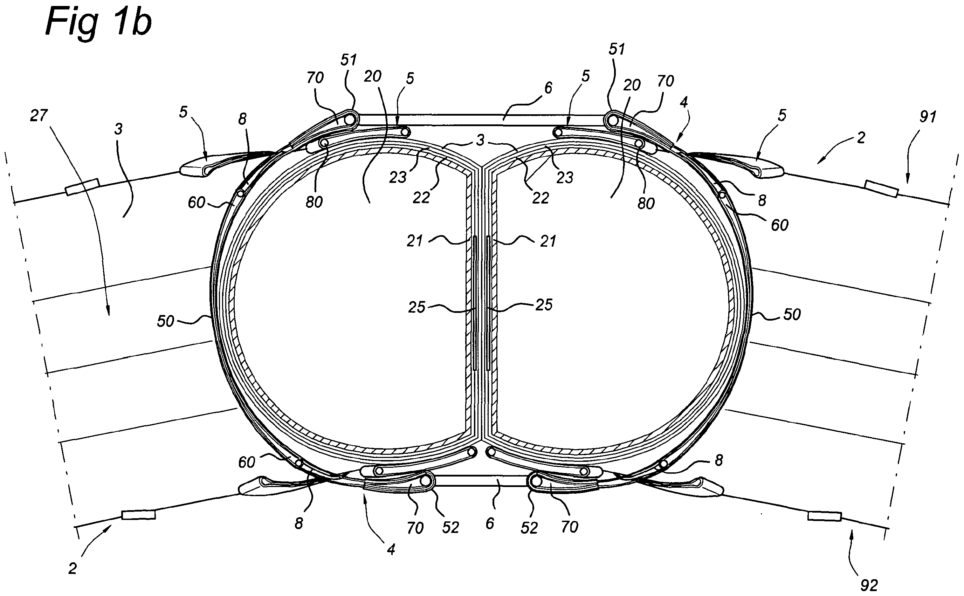

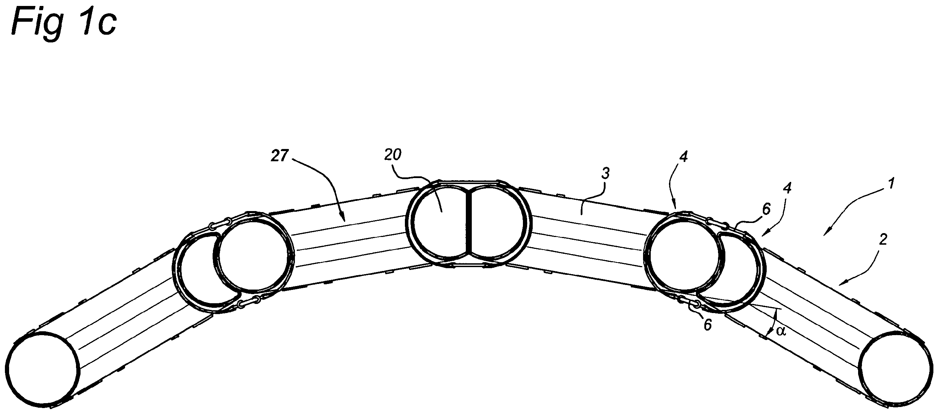

Fig. 1 shows a perspective view of an embodiment of a bowl-shaped structure 1 according to the present invention which is composed of fillable torus-shaped structural elements 2 according to the invention. Fig. 1 shows the structural elements 2 in a position of use in which the structural elements 2 are filled with a filling medium. Each structural element 2 extends around a torus axis and comprises a torus face which is at right angles to said torus axis and has an outer side 3. When the structural element 2 is not filled or not completely filled, the torus face is a flexible shell. Constructing the bowl-shaped structure 1 starts by forming a first series of non-filled structural elements 2. In this case, the structural elements 2 are connected to one another by pushing coupling elements 6 through tensioning elements 4 which are fitted to the second layer 3 which acts as outer side of the structural element 2. The tensioning elements 4 are directed in the radial direction relative to the torus axis. Subsequently, the structural elements 2 are filled with a filling medium. As a result thereof, the outer sides 3 of adjacent structural elements 2 are placed against one another and the coupling elements 6 and the tensioning elements 4 are under tensile prestress. The tensioning elements 4 and the coupling elements 6 are arranged on either side of the torus face of a structural element 2. Choosing the length of the coupling elements 6 in a suitable manner determines how tightly the adjacent structural elements 2 are placed against one another. In this way, the strength and load-bearing capacity of the bowl-shaped structure 1 is partly determined. Furthermore, by choosing different lengths for the coupling elements 6 which are situated on either side of the respective torus faces of two adjacent structural elements 2, an angle (α) can be set which these structural elements 2 make with each other. As a result thereof, a bowl-shaped structure 1 can be produced which comprises different curvatures. The bowl-shaped structure 1 is preferably formed by structural elements 2 which are arranged in a pentagonal and hexagonal configuration.

In order to produce a bowl-shaped structure 1, a second series of interconnected structural elements 2 which have not yet been filled is added to the first series of structural elements 2. Subsequently, the structural elements 2 of the second series are filled with a filling medium. Then, depending on the design of the bowl-shaped structure, a third, fourth and subsequent series of structural elements 2 can be added analogously. By adding and filling in each case a subsequent series of structural elements 2, it is possible to gradually move the bowl-shaped structure 1 further upwards in its entirety. As a result thereof, it is possible to erect structures without having to use much manpower and/or large equipment such as cranes. The costs of erecting bowl-shaped structures 1 according to the invention can consequently be lower than those of known structures according to the prior art.

Fig. 1 also shows fastening elements 5 which are in contact with the second layer 3 of the torus-shaped structural elements 2. These fastening elements 5, on the one hand, serve to keep the tensioning elements 4 in position by means of positioning elements 8 and direct them in such a manner that, by fitting coupling elements 6, adjacent structural elements 2 can be connected to one another. On the other hand, the fastening elements 5 serve to connect a cover element 10 to the structural element 2.

Fig. 1 also shows a connecting element 7 which, viewed from the torus axis, extends in the peripheral direction on the outer side 3 of the structural element 2 and connects the fastening elements 5 to one another. The connecting elements 7 could be used to connect cover elements 10 in order to make the bowl-shaped structure 1 windproof and watertight.

Fig. 1a shows a cross section of the bowl-shaped structure 1 from Fig. 1 along line Ia-Ia. The cross section shows how the adjacent structural elements 2 are placed against one another in such a manner that the bowl-shaped structure 1 is monotonously curved. Fig. 1a shows how the angle (α) is adjusted by a suitable choice of the lengths of the coupling elements 6 which are situated on either side of the respective torus faces of two adjacent structural elements 2. Fig. 1a shows an internal chamber 20 of the structural element 2 which, in use, is filled with a filling medium. This filling medium may be a gas, for example air, which is under positive pressure relative to the atmospheric pressure. As a result thereof, it is possible to provide structural elements 2 which are relatively lightweight and have sufficient stiffness and strength to be able to absorb forces acting thereon, as a result of which the stability of the bowl-shaped structure 1 is ensured.

The filling medium may be a hardenable filling medium. As a result thereof, structural elements 2 may be provided which are suitable for use in parts of the bowl-shaped structure 1 which have to ensure stable positioning on a surface. Examples of hardenable filling media which could be used for this purpose are concrete or cement. It is also conceivable for the filling medium to be partly hardenable after is has been introduced in the internal chamber 20 of the torus-shaped structural element 2.

The filling medium may also be a liquid. It is possible to use a liquid such as water as filling medium in structural elements 2 which are used to ensure stable positioning on the surface. It is also possible to fill the structural elements 2 in such a manner that the filling medium is present in both the liquid and the gaseous phase in the structural element. It is also possible for different filling media to be present in different phases in the structural element 2, that is to say that the one filling medium is present, for example, in the liquid phase and the other filling medium in the gaseous phase or that the one filling medium is present in the solid phase and the other filling medium in the liquid phase or that the one filling medium is present in the solid phase and the other filling medium in the gas phase.

Fig. 1b shows a detail of the cross section of the bowl-shaped structure 1 in area Ib of Fig. 1a. Fig. 1b shows that the internal chamber 20 is surrounded by a wall 21 which is substantially impermeable and has a first and a second side. The first side of wall 21 is turned towards the internal chamber 20 and the second side is covered by a first layer 22 which comprises flexible material. The first layer 22 is covered by a second layer 3 which comprises flexible material. On the second layer 3, tensioning elements 4 are positioned which are partly configured to connect adjacent structural elements 2 to one another. Fig. 1b also shows that a sleeve 23 is fitted between the first layer 22 and the second layer 3. It should be noted that the abovementioned layers 22, 23, 3 are provided so as to leave the inlet 9 to the internal chamber 20 clear. The sleeve 23 may comprise flexible material, for example textile and/or film. The sleeve 23 is configured to absorb essentially membrane stresses in such a manner that the structural element is substantially dimensionally stable while the filling medium is at a positive pressure relative to the atmospheric pressure therein.

Fig. 1b furthermore shows that the tensioning elements 4, the fastening elements 5, the coupling elements 6 and the positioning elements 8 are fitted both on a first side 91 and on a second side 92 of the torus face of a structural element 2. Fig. 1b also shows how an angle can be adjusted by using coupling elements 6 of different length on both sides of the respective torus faces of the two structural elements 2. In addition, Fig. 1b shows how the shape of two structural elements 2, which bear against each other in the filled state and are connected to one another by coupling elements 6, can be deformed.

Fig. 1b also shows how the tensioning elements 4, which are configured, for example, as belt loops, are held in place and are directed by the fastening elements 5 which are connected thereto via positioning elements 8.

Fig. 1b furthermore shows that tensioning element 4 comprises a belt part 50 which has a first coupling part 60 and a second coupling part 70 on a first end 51. On a second end 52 of belt part 50, the tensioning element 4 also has such coupling parts 60, 70. The coupling parts 60, 70 may be configured as loops or rings. As is illustrated in Fig. 1b, a tensioning element 4 is positioned on the outer side 3 of the torus-shaped shell, wherein the first end 51 of belt part 50 on a first side of the torus face is positioned between at least two fastening elements 5. Via axial opening 27 in the torus face, the belt part 50 runs to a second side of the torus face where the second end 52 of belt part 50 is also positioned between at least two fastening elements 5.

The tensioning element 4 may be held in place on the second layer 3 on the first side 91 of the torus face and directed by inserting a positioning element 8 in the first coupling part 60 in the first end 51 of belt part 50 and in a first coupling part 80 of the fastening elements 5 which are situated on either side of tensioning element 4. The above-described method of keeping the tensioning element 4 in place and directing it on the second side 92 of the torus face takes place in the same way as on the first side thereof. As a result thereof, tensioning element 4 can be kept in abutting contact with the second layer 3 and be directed in such a manner that it can be used to connect adjacent structural elements 2 to one another.

Connecting adjacent structural elements 2 to one another can be effected by inserting a coupling element 6 in a second coupling part 70 of a tensioning element 4 on a first side of the torus face of a first structural element 2 and in a second coupling part 70 of a tensioning element 4 on a corresponding first side of a torus face of a second structural element 2. As a result thereof, the adjacent structural elements 2 are connected to one another on their respective first sides of the torus face. The adjacent structural elements 2 are connected to one another at their respective second sides of the torus face by means of the same method. By means of a difference in length of the coupling elements 6 which are used on the first and second sides of the torus faces of the respective structural elements 2, it is possible to adjust an angle (α) between both structural elements 2.

Fig. 1c shows a cross section of the bowl-shaped structure 1 as in Fig. 1a. The difference to Fig. 1a is that the internal chambers 20 of structural elements 2 of a first series which are connected in abutting contact to structural elements 2 of a second series have a different cross section, at least in a radial direction relative to the torus axis. The structural elements 2 of the second series are coupled, in the unfilled state, to structural elements 2 of the first series which have already been filled with a filling medium. In the radial direction relative to the torus axis, the structural elements 2 of the first series have an internal chamber 20 with a substantially circular cross section. When the structural elements 2 of the second series are filled with a filling medium, the shape of their internal chamber 20 will be adapted to the external shape of the structural elements 2 of the first series until an equilibrium is reached. A possible situation is illustrated in Fig. 1a.

In particular, Fig. 1c shows that the internal chambers 20 of structural elements 2 of the second series have a moon-shaped cross section. An advantage of the moon-shaped cross section of the internal chamber 20 of the structural elements 2 of the second series is that the connected structural elements 2 of the first and second series are connected to one another via an at least partly curved contact surface. As a result thereof, a type of catching effect can be achieved, due to which a shearing force can be greater than if the contact surface is not at least partly curved, as is shown in Fig. 1c.

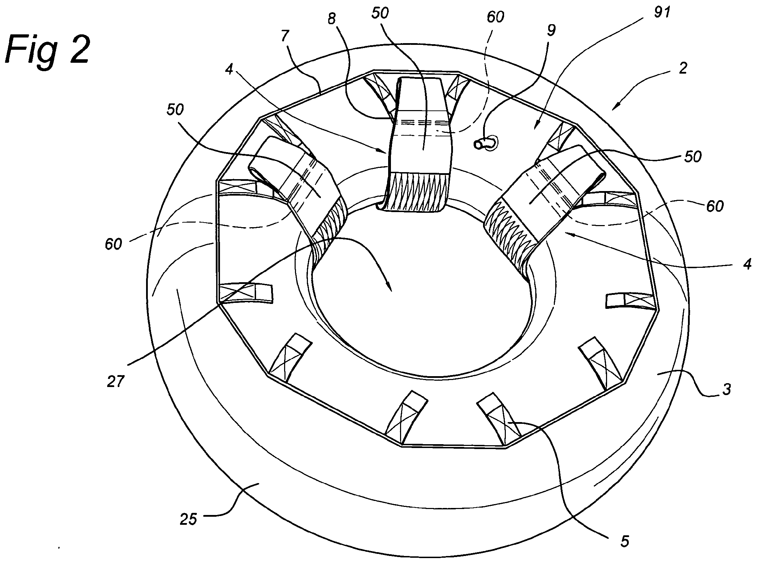

Fig. 2 shows a perspective view of an embodiment of a structural element 2 according to the present invention. This figure shows an inlet 9 through which a filling medium can be passed into an/or out of the internal chamber 20 of the structural element 2. Inlet 9 is closable and is preferably configured as an inlet with a valve function. For someone skilled in the art, it will be clear how the valve function has to be implemented, depending on the type of filling medium used.

Fig. 2 furthermore shows a relief in at least the second layer 3 which is the result of a protection element 25 which is provided on the outer side of the torus-shaped shell at the location of the outer diameter thereof, with the protection element 25 extending in the peripheral direction of the shell. In the illustrated embodiment of the structural element 2, the protection element 25 is configured as a belt which is fitted between the first layer 22 and the second layer 3. When the structural element 2 is filled with the filling medium, membrane stresses on the outer side of the shell are greatest at the location of the outer diameter. As a result thereof, the risk of damage of the structural element 2 at this location due to physical contact with external objects or to tears occurring in the material from which the torus-shaped shell of the structural element 2 is constructed is greater than at other locations. By fitting the protection element 25, the membrane stresses can be absorbed better and the risk of the abovementioned damage can at least be reduced.

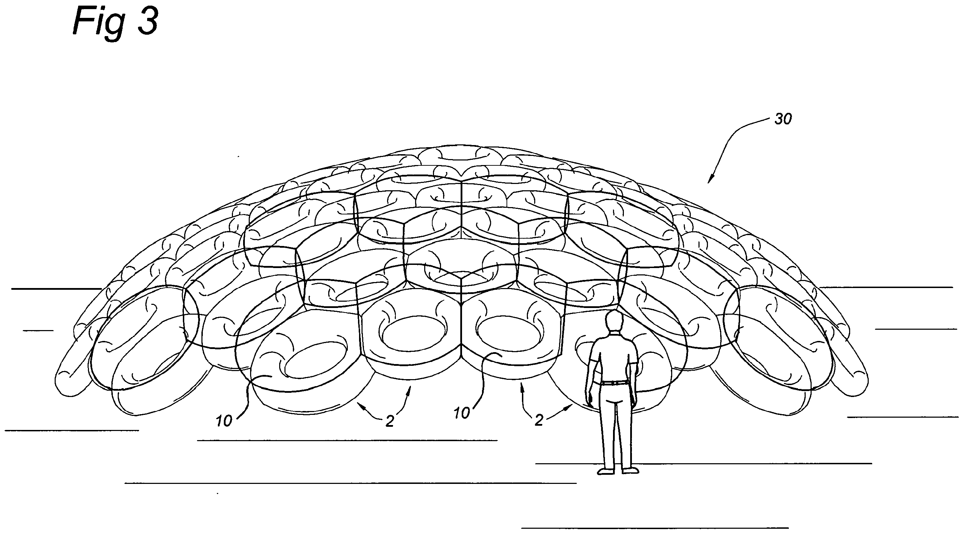

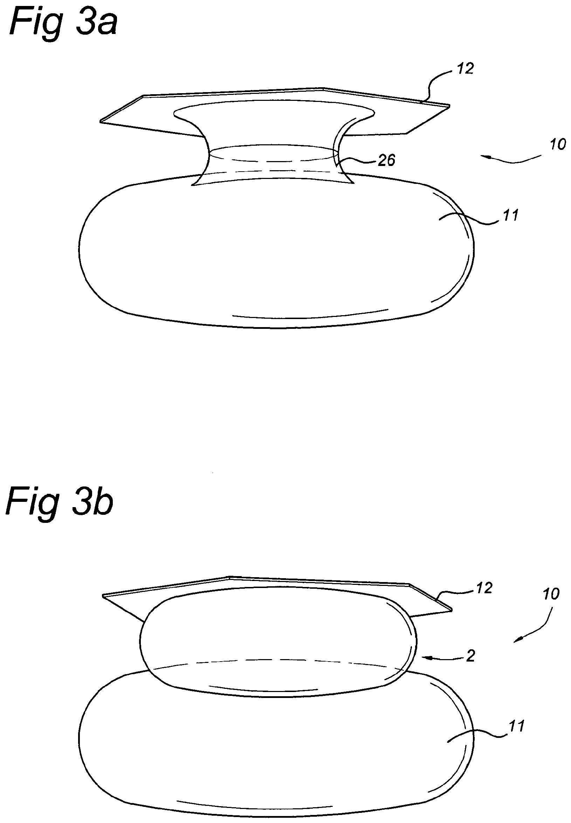

Fig. 3 shows a perspective view of an embodiment of a dome 30 according to the present invention which is provided with cover elements 10. In this example, the cover elements 10 are configured as inflatable cushions which are connected to one another in such a way that the dome 30 is windproof and watertight. For someone skilled in the art, it will be clear that several embodiments of the cover elements 10 are possible in order to achieve this object. It is also conceivable for the cover elements 10 to be configured in such a way that they make it possible to use the dome 30, for example, as climbing structure. Furthermore, it is possible for the cover elements 10 to be adapted to generate energy, for example solar energy.

Fig. 3a shows a perspective view of an embodiment of a cover element 10 which can be attached to a structural element 2 according to the present invention. The cover element 10 comprises an optionally fillable first cover part 11 which is connected to an optionally fillable second cover part 12 via an optionally fillable connecting part 26. The first cover part 11 is configured such that, in a position of use, it covers the axial opening 27 in the torus face of at least a single structural element 2 in a windproof and watertight manner. In use, the optionally fillable connecting part 26 is accommodated in a fitting manner in the axial opening 27 in the torus face of a structural element 2. Other embodiments of the cover element 10 are conceivable. A cover element 10 may, for example, comprise a connecting part 26 which is provided on both sides thereof with second cover parts 12. A cover element 10 may, for example, also comprise a connecting part 26 which is provided on both side thereof with first cover parts 11. A cover element 10 may, for example, also comprise only one first cover part 11 or only one second cover part 12. Such a cover element 10 can be connected to a structural element 2 via a connecting element 7.

Fig. 3b shows a perspective view of an assembly of the cover element 10 according to Fig. 3a and a structural element 2 according to the present invention in a position of use. In this case, the cover element 10 is connected to the structural element 2 due to the fact that the second cover part 12 and the first cover part 11 are situated in supporting contact on either side of the torus face of the structural element 2. It will be clear to someone skilled in the art that the cover element 10 may also be configured in other ways in order to achieve a windproof and watertight sealing of at least a single structural element 2. It is, for example, possible to configure the cover elements 10 in such a manner that they overlap one another in use in the manner of roof tiles.

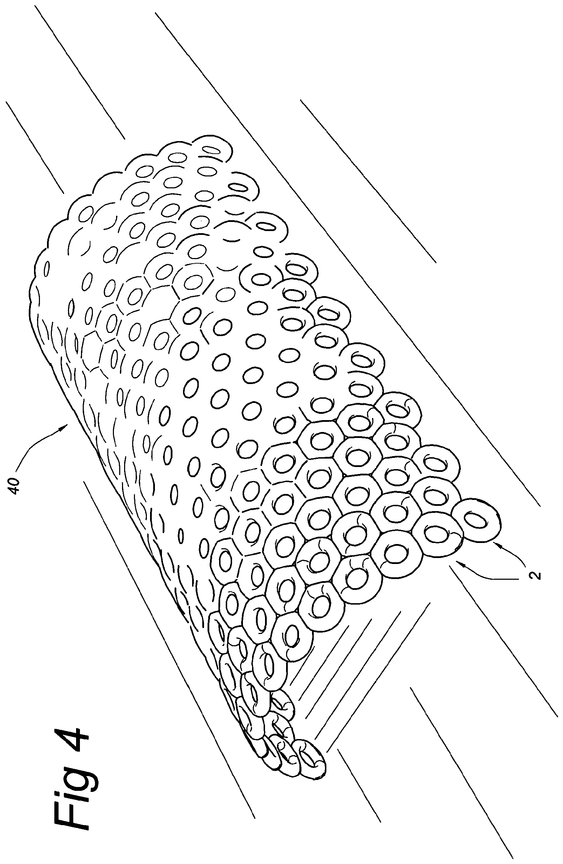

Fig. 4 shows a perspective view of an embodiment of a tunnel-shaped structure 40 according to the present invention. The highest face of a tunnel-shaped structure 40 is preferably formed by structural elements 2 which are arranged in a hexagonal configuration. It will be clear that the tunnel-shaped structure 40 can be made windproof and watertight by connecting cover elements 10 and the structural elements 2, for example in a manner as has already been described above.

## Claims

1. Method of producing of a bowl-shaped structure (1), comprising:
- providing a plurality of torus-shaped structural elements (2) which can be filled with a filling medium and each of which extends around a torus axis and each of which comprises a torus face which is directed transversely to said torus axis,
- placing the structural elements (2) against one another in such a manner that the respective torus faces of adjacent structural elements (2) are substantially in line with each other or are at a slight angle (α) to one another,
- connecting the structural elements (2) which have been placed against one another,
- filling the structural elements (2) with a filling medium in order to form a bowl-shaped structure (1), for example a dome or tunnel (30, 40).

2. Method according to Claim 1, comprising filling the structural elements (2) with a gas which is at a positive pressure relative to atmospheric pressure.

3. Method according to Claim 1, comprising filling the structural elements (2) with a hardenable filling medium.

4. Method according to Claim 1, comprising filling the structural elements (2) with a liquid.

5. Method according to one of the preceding claims, comprising, viewed at least in a cross section of the structure, placing torus faces of all structural elements (2) which are in said cross section in such a manner that the structure, at least in said cross section, comprises a monotonously curved section and preferably is completely monotonously curved.

6. Method according to one of the preceding claims, comprising:
- producing a first set of structural elements (2) which are attached to one another and together form a first series,
- filling the structural elements (2) of this first series in such a way that a structural section is obtained,
- after filling said structural elements (2), attaching further structural elements (2) thereto which are situated outside the filled series,
- filling the remaining structural elements (2).

7. Method according to one of the preceding claims, comprising:
- attaching structural elements (2) to one another by means of coupling elements (6) which engage with in each case two adjacent structural elements (2) on either side of the respective torus faces thereof,
- filling the structural elements with a filling medium,
- applying a tensile stress on the coupling elements (6) and tensioning elements (4) by filling the structural elements.

8. Structural element (2) for use with the method of producing a bowl-shaped structure according to one of the preceding claims, the structural element (2) comprising a flexible torus-shaped shell having a torus axis and a torus face that is directed transversely to said torus axis, said torus face having a first side (91) and a second side (92) that are located at opposite sides of said torus face as seen in a direction along said torus axis, said flexible torus-shaped shell further containing an internal chamber (20), a sealable inlet (9) to said internal chamber (20) configured to fill said internal chamber (20) with a filling medium, the structural element (2) being **characterized in that** it further comprises a second layer (3) forming an outer side of said flexible torus-shaped shell, tensioning elements (4), fastening elements (5), coupling elements (6) and positioning elements (8) that are arranged on said second layer (3) of said flexible torus-shaped shell at said first side (91) of said torus face and at said second side (92) of said torus face, said fastening elements (5) being configured to keep said tensioning elements (4) that are directed in a radial direction relative to said torus axis in position by means of said positioning elements (8) and to direct said tensioning elements (4) in such a manner that they are connectable with said coupling elements (6) to connect structural elements (2) to one another.

9. Structural element (2) according to Claim 8, wherein said flexible torus-shaped shell comprises a substantially impermeable wall (21) and a sleeve (23) which is situated outside the substantially impermeable wall, which substantially impermeable wall (21) is provided with a sealable inlet (9) to the internal chamber (20) and which sleeve (23) has said fastening elements (5).

10. Structural element (2) according to Claim 9, wherein the substantially impermeable wall (21) has a first and a second side, wherein the first side is turned towards the internal chamber (20), wherein, while leaving the inlet (9) to the internal chamber (20) clear, the second side is covered with a first layer (22) which comprises flexible material, wherein, while leaving the inlet (9) to the internal chamber (20) clear, the first layer (22) is covered with said second layer (3) comprising flexible material, wherein the sleeve (23) is arranged between the first (22) and the second layer (3), while leaving the inlet (9) to the internal chamber (20) clear, wherein the sleeve (23) comprises flexible material and is configured to absorb substantially membrane stresses in such a way that the shell is substantially dimensionally stable while the filling medium is situated inside the latter at a positive pressure relative to atmospheric pressure.

11. Structural element (2) according to one of Claims 8-10, wherein the fastening elements (5) are configured to connect a cover element (10) to the structural element (2).

12. Structural element (2) according to one of Claims 8-11, wherein a protection element (25) is arranged on the outer side of the torus-shaped shell at the location of the outer diameter thereof, wherein the protection element (25) extends in the peripheral direction of the shell.

13. Bowl-shaped structure produced by means of the method of producing a bowl-shaped structure according to one of Claims 1-7 using structural elements (2) according to one of Claims 8-12, wherein the parts, which are turned towards each other, of said flexible torus-shaped shells of in each case two adjacent structural elements (2) bear against each other and the coupling elements (6) and tensioning elements (4) situated on either side of the respective torus faces of said structural elements (2) are under tensile prestress.

14. Bowl-shaped structure according to Claim 13, wherein an angle (α) between the torus faces of adjacent structural elements (2) is adjustable by suitable choice of the length of the coupling elements (6).

15. Bowl-shaped structure according to Claim 13, wherein an angle (α) between the torus faces of adjacent structural elements (2) is adjustable by suitable choice of the length of the tensioning elements (4).

16. Bowl-shaped structure according to one of Claims 13-15, wherein cover elements (10) are connected to the structural elements (2) and the cover elements (10) are configured in such a manner that the structure is windproof and watertight.

## Patentansprüche

1. Verfahren zum Herstellen einer schalenförmigen Struktur (1), umfassend:
Bereitstellen einer Vielzahl von torusförmigen Strukturelementen (2), die mit einem Füllmedium gefüllt werden können, und die jeweils um eine Torusachse verlaufen und jeweils eine Torusfläche umfassen, die quer zu der Torusachse gerichtet ist,
Platzieren der Strukturelemente (2) aneinander in einer solchen Weise, dass die jeweiligen Torusflächen von benachbarten Strukturelementen (2) im Wesentlichen in Reihe miteinander oder unter einem geringen Winkel (α) zueinander verlaufen,
Verbinden der Strukturelemente (2), die aneinander platziert worden sind,
Füllen der Strukturelemente (2) mit einem Füllmedium, um eine schalenförmige Struktur (1), beispielsweise eine Kuppel oder einen Tunnel (30, 40) zu bilden.

2. Verfahren nach Anspruch 1, umfassend ein Füllen der Strukturelemente (2) mit einem Gas, welches sich bei einem Überdruck bezogen auf atmosphärischem Druck befindet.

3. Verfahren nach Anspruch 1, umfassend ein Füllen der Strukturelemente (2) mit einem härtbaren Füllmedium.

4. Verfahren nach Anspruch 1, umfassend ein Füllen der Strukturelemente (2) mit einer Flüssigkeit.

5. Verfahren nach einem der vorhergehenden Ansprüche, umfassend bei Betrachtung zumindest in einem Querschnitt der Struktur ein Platzieren von Torusflächen sämtlicher Strukturelemente (2), die sich in dem Querschnitt in einer solchen Weise befinden, dass die Struktur zumindest in dem Querschnitt einen monoton gekrümmten Abschnitt umfasst und vorzugsweise vollständig monoton gekrümmt ist.

6. Verfahren nach einem der vorhergehenden Ansprüche, umfassend:
Herstellen eines ersten Satzes von Strukturelementen (2), die aneinander angebracht sind und zusammen eine erste Reihe bilden,
Füllen der Strukturelemente (2) dieser ersten Reihe in einer solchen Weise, dass ein Strukturabschnitt erhalten wird,
nach dem Füllen der Strukturelemente (2) erfolgendes Anbringen von weiteren Strukturelementen (2) daran, die sich außerhalb der gefüllten Reihe befinden, Füllen der übrigen Strukturelemente (2).

7. Verfahren nach einem der vorhergehenden Ansprüche, umfassend:
Anbringen der Strukturelemente (2) aneinander mittels Kopplungselementen (6), die in jedem Falle in zwei benachbarte Strukturelemente (2) auf jeder Seite ihrer jeweiligen Torusflächen eingreifen,
Füllen der Strukturelemente mit einem Füllmedium,
Anwenden einer Zugspannung auf die Kopplungselemente (6) und Spannelemente (4) durch Füllen der Strukturelemente.

8. Strukturelement (2) für die Verwendung bei dem Verfahren zum Herstellen einer schalenförmigen Struktur nach einem der vorhergehenden Ansprüche,
wobei das Strukturelement (2) eine flexible torusförmige Schale umfasst, die eine Torusachse und eine Torusfläche aufweist, welche quer zu der Torusachse gerichtet ist, wobei die Torusfläche eine erste Seite (91) und eine zweite Seite (92) aufweist, welche bei Betrachtung in einer Richtung längs der Torusachse auf gegenüberliegenden Seiten der Torusfläche liegen,
wobei die flexible torusförmige Schale ferner eine Innenkammer (20) und einen dichtbaren Einlass (9) in die Innenkammer (20) enthält, der gestaltet ist, um die Innenkammer (20) mit einem Füllmedium zu füllen,
wobei das Strukturelement (2) **dadurch gekennzeichnet ist,**
**dass** es ferner eine zweite Schicht (3), die eine Außenseite der flexiblen torusförmigen Schale bildet, Spannelemente (4), Befestigungselemente (5), Kopplungselemente (6) und Positionierungselemente (8) umfasst, die auf der zweiten Schicht (3) der flexiblen torusförmigen Schale an der ersten Seite (91) der Torusfläche und an der zweiten Seite (92) der Torusfläche angeordnet sind,
wobei die Befestigungselemente (5) ausgelegt sind, um die Spannelemente (4), die in einer radialen Richtung bezogen auf die Torusachse gerichtet sind, mittels der Positionierungselemente (8) in Position zu halten und die Spannelemente (4) in einer solchen Weise zu führen, dass sie mit den Kopplungselementen (6) verbindbar sind, um Strukturelemente (2) miteinander zu verbinden.

9. Strukturelement (2) nach Anspruch 8,
wobei die flexible torusförmige Schale eine im Wesentlichen undurchlässige Wand (21) und einen Schlauch (23) umfasst, der sich außerhalb der im Wesentlichen undurchlässigen Wand befindet,
wobei die im Wesentlichen undurchlässige Wand (21) mit einem dichtbaren Einlass (9) in die Innenkammer (20) versehen ist
und wobei der Schlauch (23) die Befestigungselemente (5) aufweist.

10. Strukturelement (2) nach Anspruch 9,
wobei die im Wesentlichen undurchlässige Wand (21) eine erste Seite und eine zweite Seite aufweist,
wobei die erste Seite der Innenkammer (20) zugewandt ist,
wobei die zweite Seite, während der Einlass (9) in die Innenkammer (20) freigelassen ist, mit einer ersten Schicht (22) bedeckt ist, die ein flexibles Material umfasst,
wobei die erste Schicht (22), während der Einlass (9) in die Innenkammer (20) freigelassen ist, mit der zweiten Schicht (3) bedeckt ist, die ein flexibles Material umfasst,
wobei, während der Einlass (9) in die Innenkammer (20) freigelassen ist,
wobei der Schlauch (23) zwischen der ersten Schicht (22) und der zweiten Schicht (3) angeordnet ist, während der Einlass (9) in die Innenkammer (20) freigelassen ist, wobei der Schlauch (23) ein flexibles Material umfasst und ausgelegt ist, um im Wesentlichen Membranspannungen in einer solchen Weise zu absorbieren, dass die Schale im Wesentlichen dimensionsbeständig ist, während das Füllmedium sich innerhalb letzterer bei einem Überdruck bezogen auf atmosphärischem Druck befindet.

11. Strukturelement (2) nach einem der Ansprüche 8 bis 10, wobei die Befestigungselemente (5) ausgelegt sind, um ein Abdeckelement (10) mit dem Strukturelement (2) zu verbinden.

12. Strukturelement (2) nach einem der Ansprüche 8 bis 11, wobei auf der Außenseite der torusförmigen Schale ein Schutzelement (25) an der Stelle des äußeren Durchmessers der betreffenden Schale angeordnet ist und wobei das Schutzelement (25) in der Umfangsrichtung der Schale verläuft.

13. Schalenförmige Struktur, hergestellt mittels des Verfahrens zum Herstellen einer schalenförmigen Struktur nach einem der Ansprüche 1 bis 7 unter Verwendung von Strukturelementen (2) nach einem der Ansprüche 8 bis 12,
wobei die einander zugewandten Teile der flexiblen torusförmigen Schalen von in jedem Fall zwei benachbarten Strukturelementen (2) aneinander anliegen und die Kopplungselemente (6) und Spannelemente (4) auf jeder Seite der jeweiligen Torusflächen der Strukturelemente (2) sich unter Zugvorspannung befinden.

14. Schalenförmige Struktur nach Anspruch 13, wobei ein Winkel (α) zwischen den Torusflächen benachbarter Strukturelemente (2) durch geeignete Wahl der Länge der Kopplungselemente (6) einstellbar ist.

15. Schalenförmige Struktur nach Anspruch 13, wobei ein Winkel (α) zwischen den Torusflächen benachbarter Strukturelemente (2) durch geeignete Wahl der Länge der Spannelemente (4) einstellbar ist.

16. Schalenförmige Struktur nach einem der Ansprüche 13 bis 15, wobei mit den Strukturelementen (2) Abdeckelemente (10) verbunden sind und wobei die Abdeckelemente (10) in einer solchen Weise ausgelegt sind, dass die Struktur windundurchlässig und wasserdicht ist.

## Revendications

1. Procédé pour produire une structure en forme de bol (1) comprenant les étapes consistant à :
prévoir une pluralité d'éléments structurels en forme de tore (2) qui peuvent être remplis avec un milieu de remplissage et dont chacun s'étend autour d'un axe de tore et dont chacun comprend une face de tore qui est dirigée transversalement par rapport audit axe de tore,
placer les éléments structurels (2) les uns contre les autres de sorte que les faces de tore respectives des éléments structurels (2) adjacents sont sensiblement alignées entre elles ou sont à un léger angle (α) entre elles,
raccorder les éléments structurels (2) qui ont été placés les uns contre les autres,
remplir les éléments structurels (2) avec un milieu de remplissage afin de former une structure en forme de bol (1), par exemple un dôme ou un tunnel (30, 40).

2. Procédé selon la revendication 1, comprenant l'étape consistant à remplir les éléments structurels (2) avec un gaz qui est à une pression positive par rapport à la pression atmosphérique.

3. Procédé selon la revendication 1, comprenant l'étape consistant à remplir les éléments structurels (2) avec un milieu de remplissage durcissable.

4. Procédé selon la revendication 1, comprenant l'étape consistant à remplir les éléments structurels (2) avec un liquide.

5. Procédé selon l'une des revendications précédentes, comprenant, observé au moins dans une section transversale de la structure, l'étape consistant à placer les faces de tore de tous les éléments structurels (2) qui sont dans ladite section transversale de sorte que la structure, au moins dans ladite section transversale, comprend une section incurvée de manière monotone et est de préférence complètement incurvée de manière monotone.

6. Procédé selon l'une des revendications précédentes, comprenant les étapes consistant à :
produire un premier ensemble d'éléments structurels (2) qui sont fixés entre eux et forment ensemble une première série,
remplir les éléments structurels (2) de cette première série de sorte qu'une section structurelle est obtenue,
après le remplissage desdits éléments structurels (2), fixer en outre les éléments structurels (2) qui sont situés à l'extérieur de la série remplie,
remplir les éléments structurels (2) résiduels.

7. Procédé selon l'une des revendications précédentes, comprenant les étapes consistant à :
fixer les éléments structurels (2) entre eux au moyen d'éléments de couplage (6) qui se mettent en prise dans chaque cas, avec deux éléments structurels (2) adjacents de chaque côté de leurs faces de tore respectives,
remplir les éléments structurels avec un milieu de remplissage,
appliquer une contrainte de traction sur les éléments de couplage (6) et les éléments de tension (4) en remplissant les éléments structurels.

8. Elément structurel (2) destiné à être utilisé avec le procédé de production d'une structure en forme de bol selon l'une des revendications précédentes, l'élément structurel (2) comprenant une coque flexible en forme de tore ayant un axe de tore et une face de tore qui est dirigée transversalement par rapport audit axe de tore, ladite surface de tore ayant un premier côté (91) et un second côté (92) qui sont positionnés au niveau des côtés opposés de ladite face de tore, lorsqu'ils sont observés dans une direction le long dudit axe de tore, ladite coque flexible en forme de tore contenant en outre une chambre interne (20), une entrée scellable (9) à ladite chambre interne (20) configurée pour remplir ladite chambre interne (20) avec un milieu de remplissage, l'élément structurel (2) étant **caractérisé en ce qu'**il comprend en outre une seconde couche (3) formant un côté externe de ladite coque flexible en forme de tore, des éléments de tension (4), des éléments de fixation (5), des éléments de couplage (6) et des éléments de positionnement (8) qui sont agencés sur ladite seconde couche (3) de ladite coque flexible en forme de tore au niveau dudit premier côté (91) de ladite face de tore et au niveau dudit second côté (92) de ladite face de tore, lesdits éléments de fixation (5) étant configurés pour maintenir lesdits éléments de tension (4) qui sont dirigés dans une direction radiale par rapport audit axe de tore en position au moyen desdits éléments de positionnement (8) et pour diriger lesdits éléments de tension (4) de sorte qu'ils peuvent être raccordés avec lesdits éléments de couplage (6) pour raccorder les éléments structurels (2) entre eux.

9. Elément structurel (2) selon la revendication 8, dans lequel ladite coque flexible en forme de tore comprend une paroi sensiblement imperméable (21) et un manchon (23) qui est situé à l'extérieur de la paroi sensiblement imperméable, laquelle paroi sensiblement imperméable (21) est prévue avec une entrée scellable (9) à la chambre interne (20) et lequel manchon (23) a lesdits éléments de fixation (5).

10. Elément structurel (2) selon la revendication 9, dans lequel ladite paroi sensiblement imperméable (21) a un premier et un second côté, dans lequel le premier côté est tourné vers la chambre interne (20), dans lequel, tout en laissant l'entrée (9) de la chambre interne (20) dégagée, le second côté est recouvert avec une première couche (22) qui comprend un matériau flexible, dans lequel, tout en laissant l'entrée (9) de la chambre interne (20) dégagée, la première couche (22) est recouverte avec ladite seconde couche (3) comprenant le matériau flexible, dans lequel, tout en laissant l'entrée (9) de la chambre interne (20) dégagée, dans lequel le manchon (23) est agencé entre la première (22) et la seconde couche (3), tout en laissant l'entrée (9) de la chambre interne (20) dégagée, dans lequel le manchon (23) comprend un matériau flexible et est configuré pour absorber sensiblement des contraintes de membrane de sorte que la coque est sensiblement dimensionnellement stable, alors que le milieu de remplissage est situé à l'intérieur de cette dernière à une pression positive par rapport à la pression atmosphérique.

11. Elément structurel (2) selon l'une des revendications 8 à 10, dans lequel les éléments de fixation (5) sont configurés pour raccorder un élément de couvercle (10) à l'élément structurel (2).

12. Elément structurel (2) selon l'une des revendications 8 à 11, dans lequel un élément de protection (25) est agencé sur le côté externe de la coque en forme de tore à l'emplacement de son diamètre externe, dans lequel l'élément de protection (25) s'étend dans la direction périphérique de la coque.

13. Structure en forme de bol produite au moyen du procédé de production de structure en forme de bol selon l'une des revendications 1 à 7, à l'aide d'éléments structurels (2) selon l'une des revendications 8 à 12, dans laquelle les parties, qui sont tournées les unes vers les autres, desdites coques flexibles en forme de tore dans chaque cas, de deux éléments structurels (2) adjacents, s'appuient les unes contre les autres et les éléments de couplage (6) et les éléments de tension (4) situés de chaque côté des faces de tore respectives desdits éléments structurels (2) sont sous une précontrainte de tension.

14. Structure en forme de bol selon la revendication 13, dans laquelle un angle (α) entre les face de tore des éléments structurels (2) adjacents est ajustable en choisissant de manière appropriée la longueur des éléments de couplage (6).

15. Structure en forme de bol selon la revendication 13, dans laquelle un angle (α) entre les faces de tore des éléments structurels (2) adjacents est ajustable en choisissant de manière appropriée la longueur des éléments de tension (4).

16. Structure en forme de bol selon l'une des revendications 13 à 15, dans laquelle les éléments de couvercle (10) sont raccordés aux éléments structurels (2) et les éléments de couvercle (10) sont configurés de sorte que la structure est à l'épreuve du vent et étanche.
